# EUROPÄISCHE PATENTSCHRIFT

(11) **EP 0 950 582 B1**
(45) Veröffentlichungstag und Bekanntmachung des Hinweises auf die Patenterteilung: **17.12.2003**
(21) Anmeldenummer: 99106436.1
(22) Anmeldetag: 29.03.1999
(51) Int. Cl.: B60R 21/32, B60R 21/01

(54) **Verfahren zur Auslösung eines zweistufigen Airbag-Gasgenerators**
Method for inflating a two-stage gas generator for airbag
Méthode de déclenchement d'un générateur de gaz d'airbag ayant 2 niveaux de fonctionnement

(30) Priorität: 17.04.1998 DE 19816989
(43) Veröffentlichungstag der Anmeldung: 20.10.1999
(73) Patentinhaber: DaimlerChrysler AG, 70567 Stuttgart (DE)
(72) Erfinder: Brambilla, Luigi, Dr., 71032 Böblingen (DE); Müller, Manfred, 73779 Deizisau (DE); Rudolf, Harald, 72072 Tübingen (DE)

(56) Entgegenhaltungen:
- EP-A- 0 823 356
- DE-A- 2 745 620
- DE-A- 19 610 833
- US-A- 5 411 289

## Beschreibung

Die Erfindung betrifft ein Verfahren zur Auslösung eines zweistufigen Airbag-Gasgenerators in einem Kraftfahrzeug gemäß dem Oberbegriff des Anspruchs 1.

Auslöseverfahren sind aus dem Stand der Technik hinlänglich bekannt. Zur Bewertung hinsichtlich der Unfallschwere werden z.B. Schwellwerte herangezogen, deren Überschreitung durch aus dem Beschleunigungssignal abgeleitete Arbeitssignale auf eine bestimmte Unfallschwere hinweist. Insbesondere ist aus der EP 0 458 796 B2 ein Verfahren zur Auslösung von Rückhaltemitteln bekannt, bei dem ein Beschleunigungssignal gemessen und durch eine Integration in ein DV-Geschwindigkeitssignal umgewandelt wird, welches ungefähr die crashbedingte Geschwindigkeitsabnahme wiederspiegelt. Zur Bildung eines Auslösekriteriums für einen Airbag ist ein Schwellwert für das genannte DV-Geschwindigkeitssignal vorgebbar. Dieser Schwellwert wiederum ist in Abhängigkeit von einer oder mehreren vom Crashvorgang abgeleiteten Zustandsgrößen, beispielsweise als Funktion der im Crash abgelaufenen Zeit veränderbar. Weiterhin ist bekannt, sicherheitsrelevante Zustandsgrößen z.B. Gurtschloßschalterzustand, Sitzbelegung durch eine Person oder Kindersitz, Insassenposition oder Insassengewicht etc. in die Auslösebedingungen einzubeziehen. Abhängig von der erkannten Unfallschwere und dem Insassenzustand werden die Rückhaltemittel aktiviert.

Insbesondere in der Kombination von Gurtstraffer und Airbag sind mehrstufige Rückhaltesysteme bekannt und werden in Fahrzeugen eingesetzt, bei dem abhängig von der Unfallschwere und dem Insassen - ob er z.B. angegurtet ist oder nicht - der Gurtstraffer und der Airbag gleichzeitig, nacheinander oder selektiv aktiviert werden. Durch gestaffelte Auslöseschwellen für Gurtstraffer und Airbag kann ein nach der Unfallschwere abgestuftes Auslöseverhalten erreicht werden.

Um die Belastung des Insassen durch einen sich entfaltenden Airbag zu verringern, sind zwei- oder mehrstufige Gasgeneratoren zum Befüllen des Airbags bekannt, bei denen die Zündung der zweiten Stufe zeitversetzt nach Zündung der ersten Stufe erfolgt.

Zweistufige Gasgeneratoren eines ersten Typs haben zwei getrennte Gaserzeugungssysteme mit jeweils eigenem Zünder (DE 19541584 A1). In jeder Stufe wird eine spezifische Menge Gas erzeugt. Indem nur eine Stufe oder beide Stufen nacheinander zeitversetzt gezündet werden, kann der erzeugte Gasmengenstrom zur Befüllung des Airbags variiert und an die Unfallschwere angepaßt werden.

Ein zweiter Typ von zweistufigen Gasgeneratoren weist ein einziges Gaserzeugungssystem mit zwei Zündern auf. Nach der ersten Zündung kann mit dem zweiten Zünder in die Expansionsphase des Gases hinein eine Nachzündung bewirkt werden, um die Gasexpansion zu beschleunigen und die Gasmenge zu erhöhen. Die Wirkung der zweiten Zündung hängt dabei stark von dem Zeitpunkt der Zündung ab: Am Ende einer durch eine erste Zündung initiierte Gasexpansionsphase ist die Wirkung einer Nachzündung gering.

Ein Verfahren gemäß dem Oberbegriff von Anspruch 1 ist z.B. auch aus DE 2745620 bekannt.

Analog zu den eingangs geschilderten Verfahren mit gestaffelten Auslöseschwellen für Gurtstraffer und Airbag ist es denkbar, auch ein Verfahren für einen zweistufigen Gasgenerator zu bilden, indem gestaffelte Auslöseschwellen für die Zündung der ersten und zweiten Stufe vorgegeben werden: Wird aufgrund der Bewertung des Beschleunigungssignals ein besonders schwerer Aufprall mit großen Verzögerungswerten erkannt, werden beide Stufen schnell aufeinanderfolgend gezündet, was den Airbag rasch in einen schutzwirksamen Zustand bringt, wie es für die Unfallsituation angemessen ist.

Seitens der Anmelderin werden in diesem Verfahren jedoch Nachteile gesehen, die im folgenden dargestellt werden.

Um bei allen relevanten Crash-Ereignissen eine ausreichend schnelle Auslösung zu erreichen, müßte die Schwelle für die zweite Stufe so niedrig gewählt werden, daß bei weniger schweren Crash-Ereignissen eine Entscheidung zur Zündung zur zweiten Stufe sehr früh, gemessen an der Vorverlagerung des Insassen, getroffen würde. Weil die zweite Stufe auch noch zu einem späteren Zeitpunkt hätte gezündet werden können, um den Airbag in einen schutzwirksamen Zustand bringen zu können, wird Zeit verschenkt, die zur Beobachtung und Bewertung des Beschleunigungssignals genutzt werden könnte.

Insbesondere bei Crashs mittlerer Schwere ist eine sanfte Entfaltung des Airbags erwünscht, um die Belastung des Insassen durch einen sich entfaltenden Airbag zu verringern. Dies erfordert eine kontrollierte Steuerung der Zeitdifferenz zwischen erster und zweiter Stufe, welche ein relevanter Parameter zur Beeinflussung des Entfaltungsverhaltens des Airbags ist. Die zweite Stufe darf nicht zu früh aber auch nicht zu spät gezündet werden: Einerseits bedingt die begrenzte Modulfestigkeit des Gasgenerators, daß eine Mindestzeitspanne zwischen Zündung der ersten und der zweiten Stufe des Gasgenerators eingehalten werden muß, andererseits muß eine Zündung verhindert werden, wenn die Vorverlagerung des Insassen so weit fortgeschritten ist, daß eine Verletzungsgefahr von einer Zündung der zweiten Stufe ausgehen kann.

Die genaue Steuerung der Zeitdifferenz kann durch das vorangehend beschrieben Verfahren mit gestaffelten Auslöseschwellen für die Zündung der ersten und zweiten Stufe für reale Crashverläufe nicht befriedigend geleistet werden.

Aufgabe der Erfindung ist es daher, ein gattungsgemäßes Verfahren zur Auslösung eines zweistufigen Airbag-Gasgenerators anzugeben, welches auf der Basis der aufgenommenen Beschleunigungssignalen eines Beschleunigungssensors eine Entscheidung zur Zündung der zweiten Stufe zuverlässig und angepaßt an die Unfallschwere ausführt und eine genaue Steuerung der Zeitdifferenz zwischen Auslösung der ersten und zweiten Stufe ermöglicht.

Diese Aufgabe wird durch die Merkmale des Anspruchs 1 gelöst, wobei die Merkmale der Unteransprüche vorteilhafte Aus- und Weiterbildungen kennzeichnen.

Gemäß dem Verfahren nach Anspruch 1 wird das Beschleunigungssignal zumindest bis zum Verstreichen einer vorbestimmten Zeitspanne T1 ab Zünden der ersten Stufe hinsichtlich der Unfallschwere bewertet, bevor auf Grundlage vorgegebener Auslösebedingungen in Abhängigkeit der ermittelten Unfallschwere eine Auslöseentscheidung zur Zündung der zweiten Stufe des Gasgenerators getroffen wird.

Dies hat den Vorteil, daß der Zeitpunkt der Auslösung der zweiten Stufe an den verwendeten Airbag-Gasgenerator angepaßt und so gewählt werden kann, daß die Zündung der zweiten Stufe keinesfalls früher als mit Rücksicht auf die Modulfestigkeit erlaubt und nicht früher als unbedingt nötig erfolgt, wobei die dadurch gewonnene Zeitspanne T1 zur Bewertung des Beschleunigungssignals voll genutzt wird, was die Zuverlässigkeit der Bewertung hinsichtlich der Unfallschwere verbessert.

Die Bewertung der Unfallschwere, welche über die Auslösung der zeiten Stufe entscheidet, beruht erfindungsgemäß auf einer Einordnung des Crash-Ereignisses in ein rasterhaftes Schema von nach der Unfallschwere gestaffelten Unfallschwerezonen, z.B. leichter, mittlerer und schwerer Crash. In dem nachfolgend angeführten Ausführungsbeispiel wird das Beschleunigungssignal unter Verwendung einer einfachen Integration zu einem DV-Geschwindigkeitssignal aufbereitet und einer Unfallschwerezone in einem Geschwindigkeits-Ereignisraum zugeordnet. Die Unfallschwerezonen teilen das Crash-Ereignis grob nach der crashbedingten Geschwindigkeitsabnahme ein. Alternativ könnte zur Bewertung der Unfallschwere der zeitliche Verlauf eines oder mehrerer aus dem Beschleunigungssignal abgeleiteter Arbeitssignale erfaßt und mittels eines Mustererkennungsverfahren durch Vergleich mit gespeicherten Idealmustern, das Crash-Ereignis einer Unfallschwerezone zugeordnet werden.

Weitere Einzelheiten und vorteilhafte Weiterbildungen des erfindungsgemäßen Verfahrens ergeben sich aus weiteren Unteransprüchen in Verbindung mit der folgenden Beschreibung.

Ein Ausführungsbeispiel der Erfindung ist in der Zeichnung dargestellt und wird nachstehend erläutert. Es zeigen:
- Fig. 1: ein Blockschaltbild einer Sicherheitseinrichtung mit einem zweistufigen Gasgenerator,
- Fig. 2: die Einteilung von Crash-Ereignissen in Unfallschwerezonen,
- Fig. 3: die Generierung von Unfallschwerezonen im Geschwindigkeits-Ereignisraum,
- Fig. 4: die Verschiebung der Zonenschranken in Abhängigkeit des Gewichtes des Insassen,
- Fig. 5: die Verschiebung der Zonenschranken in Abhängigkeit der Relativgeschwindigkeit beim Crashereignis bzw. der Eigengeschwindigkeit des Fahrzeuges.

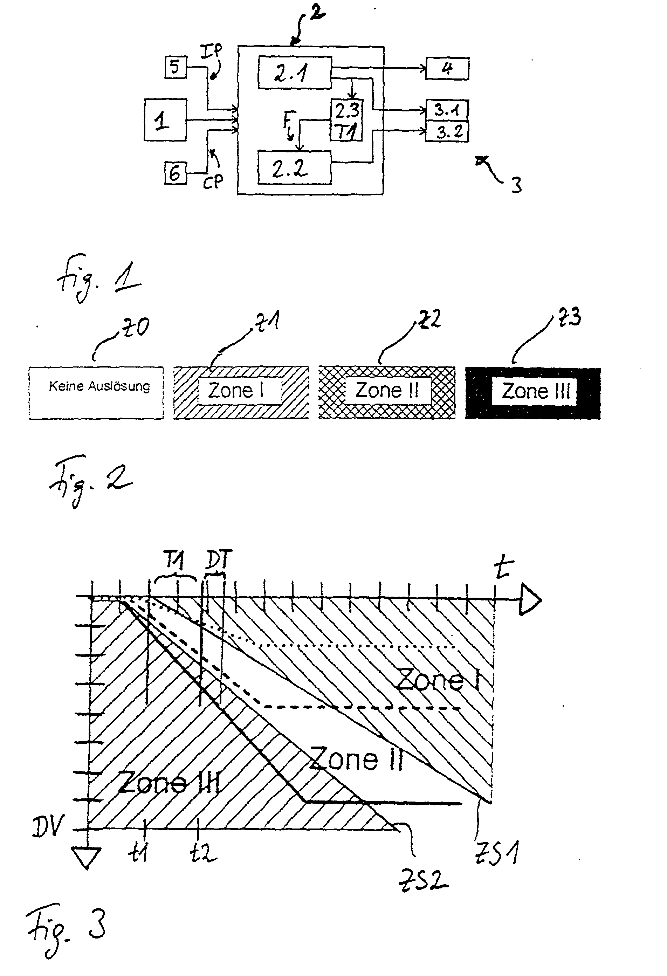

Das in Fig. 1 dargestellte Blockschaltbild zeigt eine Sicherheitseinrichtung mit einem mehrstufigen Rückhaltesystem 3, 4 für ein Kraftfahrzeug. Die Sicherheitseinrichtung umfaßt zumindest ein Beschleunigungssensor 1, welcher ein aufprallbedingtes Beschleunigungssignal aufnimmt, ein Steuergerät 2 und das mehrstufige Rückhaltesystem 3, 4. Letzteres umfaßt zumindest ein zweistufigen Airbag-Gasgenerator 3 mit einer Zündstufe 3.1 für die erste Airbag-Stufe und einer Zündstufe 3.2 für die zweite Airbag-Stufe. Weitere Rückhaltekomponenten 4 wie Gurtstraffer, Gurtkraftbegrenzer, Seitenairbags etc. können ebenfalls vorgesehen sein. Die Signale des Sensors 1 werden von dem Steuergerät 2 aufbereitet und hinsichtlich der Unfallschwere gemäß eines ersten Bewertungsverfahren in einer ersten Bewertungsstufe 2.1 bewertet, wobei in Abhängigkeit der ermittelten Unfallschwere eine Auslöseentscheidung für die erste Stufe 3.1 des Gasgenerators 3 und ggfs. für die weiteren Rückhaltekomponenten 4, insbesondere einen Gurtstraffer getroffen wird. Das erste Bewertungsverfahren kann, wie die eingangs geschilderten Auslöseverfahren, mit gestaffelten Auslöseschwellen für einen Gurtstraffer und der ersten Airbagstufe 3.1 ausgebildet sein.

Erfindungsgemäß ist eine zweite Bewertungsstufe 2.2 vorgesehen, welche das Beschleunigungssignal gemäß eines zweiten Bewertungsverfahrens bewertet, welches mit dem ersten Bewertungsverfahren identisch sein kann, bevorzugt aber verschieden gewählt ist, wie aus dem folgenden Ausführungsbeispiel hervorgeht. Gemäß der Erfindung ist ein Zeitglied 2.3 vorgesehen, welches ausgelöst durch ein Zündsignal zur Zündung der ersten Stufe 3.1 erst nach Verstreichen einer Zeitspanne T1 ein Freigabesignal F an die zweite Bewertungsstufe 2.2 gibt. Bei Anliegen des Freigabesignals F wird auf der Grundlage vorgegebener Auslösebedingungen in Abhängigkeit der ermittelten Unfallschwere eine Auslöseentscheidung zur Zündung der zweiten Stufe 3.2 getroffen.

In einer bevorzugten Weiterbildung wird das Steuergerät 2 zusätzlich angesteuert durch auf den zu schützenden Insassen bezogene Zustandsgrößen IP (Insassenparameter) einer Insassenerkennung 5. Eine solche typische Zustandsgröße ist der Gurtschloßschalterzustand, welcher anzeigt, ob der Insasse angegurtet ist oder nicht. Zusätzlich können weitere Zustandsgrößen wie Größe oder Gewicht des Insassen, Insassenposition (Out-Of-Position) und Sitzposition oder, wenn der zu schützende Insasse ein Beifahrer ist, der Sitzbelegungszustand des Beifahrersitzes durch einen Insassen oder einen Kindersitz, zur Ansteuerung verwendet werden.

Desweiteren kann das Steuergerät 2 von einer Crashparametererfassung 6 mit einer auf die Crashparameter bezogenen Zustandsgröße CP angesteuert werden, welche auf die auftretende oder zu erwartende Kollisionsenergie des Crash-Ereignisses schließen läßt. Eine entsprechende Zustandsgröße könnte aus dem Beschleunigungssignal abgeleitet werden. Alternativ kann die Crashparametererfassung 6 auch gebildet werden durch ausgelagerte, d.h. in der Nähe der Fahrzeugaußenhaut angeordneten Deformationssensoren, welche z.B. die Intrusionsgeschwindigkeit messen, wobei aus Deformation und Instrusionsgeschwindigkeit auf die Kollisionsenergie geschlossen werden kann. Alternativ kann die Crashparametererfassung 6 auch gebildet werden durch eine Präventiv- oder Precrash-Sensorik, welche z.B. mittels Radarmessungen die Relativgeschwindigkeit zum Kollisionsobjekt kurz vor dem Crash-Ereignis erfaßt. Ausgehend von einer gemessenen Relativgeschwindigkeit, kann immer dann, wenn die gemessene Relativgeschwindigkeit nennenswert von der Fahrzeugeigengeschwindigkeit abweicht, auf ein sich bewegendes Fahrzeug geschlossen und unter Zugrundelegung einer typischen Fahrzeugmasse die kinetische Energie des kollidierenden Fahrzeugs abgeschätzt werden.

In einer vereinfachten aber kostengünstigen Ausgestaltung kann anstelle einer meßtechnisch erfaßten Relativgeschwindigkeit zum Kollisionsobjekt die Fahrzeugeigengeschwindigkeit als eine die Kollisionsenergie charakterisierende Zustandsgröße CP eingespeist werden, um die Zeitspanne T1 dem Crash-Ereignis dynamisch anzupassen. Zwar stimmt die Eigengeschwindigkeit nur für ruhende Kollisionsobjekte mit der Relativgeschwindigkeit überein und ist deshalb im allgemeinen kein geeigneter Parameter, um das Crash-Ereignis zu charakterisieren. Bei Crashs mit einem entgegenkommenden Fahrzeug jedoch bildet die Eigengeschwindigkeit immerhin eine untere Grenze für die Relativgeschwindigkeit. Insgesamt kann die Eigengeschwindigkeit daher verwendet werden, die Auslöseempfindlichkeit für die zweite Stufe auf einen Crash so abzustimmen, daß sich für einen Aufprall mit der Eigengeschwindigkeit oder einer höheren Relativgeschwindigkeit ein möglichst optimales Auslöseverhalten ergibt. Bei Auffahrunfällen ist die Relativgeschwindigkeit immer geringer als die Eigengeschwindigkeit, so daß hier eine von der eingespeisten Eigengeschwindigkeit bewirkte Erhöhung der Auslöseempfindlichkeit keine sinnvolle Anpassung an das Crash-Ereignis darstellen würde, insbesondere wenn die Relativgeschwindigkeit sehr viel niedriger als die Eigengeschwindigkeit ist. Ein solches Crash-Ereignis, d.h. ein Auffahrunfall auf ein geringfügig langsamer vorausfahrendes Fahrzeug, führt jedoch im Regelfall erst gar nicht zu einer Auslösung der ersten Stufe des Gasgenerators. Für die Beeinflussung der Auslösung der zweiten Stufe, der aufgrund der vorangehenden Auslösung der ersten Stufe immer ein Bewertung hinsichtlich der auftretenden Beschleunigung und damit der Kollisionsenergie vorausgeht, ist daher eine Einspeisung der Eigengeschwindigkeit als eine die Kollisionsenergie charakterisierende Zustandsgröße sinnvoll und verbessert das Gesamtverhalten.

Die auf den Insassen bzw. die Crashparameter bezogenen Zustandsgrößen können sowohl die vorgegebene Zeitspanne T1, die Bewertungsverfahren zur Ermittlung der Unfallschwere als auch die Auslösebedingungen beeinflussen, welche die ermittelte Unfallschwere mit Auslöseentscheidungen verknüpfen.

Bei der Bemessung von T1 muß ein Optimum gefunden werden zwischen möglichst langer Beobachtungszeit auf der einen und zu minimierendem Verletzungsrisiko auf der anderen Seite. Eine untere Schranke T1min für die Zeitspanne T1 bildet dabei diejeinige Zeitdifferenz zwischen erster und zweiter Zündung, welche gerade noch eine pralle Füllung des Airbags innerhalb der für schwere Crashs mit hohen Verzögerungswerten benötigten Füllzeiten von typischerweise 40 msec ermöglicht. Eine obere Schranke Tlmax für die Zeitspanne T1 wird durch die Vorverlagerung des Insassen bedingt, welche bei Zündung der zweiten Stufe nicht zu weit fortgeschritten sein darf, um das Verletzungsrisiko gering zu halten.

Die Zeitspanne T1 kann innerhalb dieser Schranken fest und auf den spezifischen Gasgenerator abgestimmt gewählt sein. Bei Verwendung des eingangs geschilderten ersten Typs von Gasgeneratoren und bei einer hälftigen Aufteilung der erzeugbaren Gasmenge auf die beiden Kammern ergibt sich für die Zeitspanne T1 ein geeigneter Wert von T1 = 15-18 msec. Nach der halben Füllzeit von ca. 15-18 msec ist der Gassack bereits entfaltet aber noch nicht prall.

Denkbar ist auch eine Weiterbildung, bei der die Zeitspanne T1 innerhalb der oben angegebenen unteren und oberen Schranken dynamisch an das reale Crash-Ereignis angepaßt wird. Die Anpassung erfolgt in Abhängigkeit einer vom Crash-Ereignis beeinflußten Zustandsgröße, insbesondere der oben eingeführten auf die Crashparameter bezogenen Zustandsgröße CP, welche auf die auftretende oder zu erwartende Kollisionsenergie des Crash-Ereignisses schließen läßt, wobei die Zeitspanne T1 zur unteren Schranke T1min hin verschoben wird, wenn die Zustandsgröße eine hohe Kollisionsenergie anzeigt, womit eine schnelle Auslösung erreicht wird.

In einer vereinfachten aber kostengünstigen Ausgestaltung kann, wie oben erläutert, die Fahrzeugeigengeschwindigkeit als eine die Kollisionsenergie charakterisierende Zustandsgröße eingespeist werden, um die Zeitspanne T1 dem Crash-Ereignis dynamisch anzupassen.

Um eine zu späte zu Zündung der zweiten Stufe zu verhindern, kann vorgesehen sein, daß nur zu dem einen Zeitpunkt, welcher durch die Zündung der ersten Stufe zuzüglich der Zeitspanne T1 definiert ist, die zweite Zündung erfolgen kann. Dies ist ein Grenzfall der allgemeineren Ausgestaltung, daß nur innerhalb eines durch ein Zeitfenster DT bestimmten Zeitintervalls T1 bis T1+DT eine Zündung nach den vorgegebenen Auslösebedingungen erfolgen kann. Wenn bei Ablauf der Zeitspanne T1 kein schwerer Unfall angezeigt wird, welcher eine sofortige Zündung der zweiten Stufe erforderlich macht, so bedeutet dies gleichzeitig, daß auch die Vorverlagerung langsamer vonstatten geht, so daß die zweite Stufe auch noch etwas später gezündet werden könnte, ohne daß das Verletzungsrisiko erhöht würde. Dies gilt umso mehr bei den Generatoren des zweiten Typs mit nur einem Gaserzeugungssystem, bei denen die Wirkung der zweiten Zündung mit zunehmender Zeitdifferenz abnimmt. Alternativ kann vorgesehen sein, daß nach Ablauf der Zeitspanne T1+DT anstelle einer vollständigen Unterdrückung jeder Auslösung der zweiten Stufe eine Auslösung nach besonderen Auslösebedingungen erfolgen kann.

Da der optimale Zündzeitpunkt allgemein von der Position des Insassen relativ zum Airbag abhängig ist, ist eine Weiterbildung vorteilhaft, bei der die Zeitspanne T1 oder das Zeitfenster DT dynamisch und bezogen auf den Insassen an das reale Crash-Ereignis angepaßt wird. Dies kann z.B. mittels eines Algorithmus erfolgen, welcher den Zeitpunkt ermittelt, zu dem eine durch zweimalige Integration aus dem Beschleunigungssignal hergeleitete Zustandsgröße für die Insassenvorverlagerung einen vorgegebenen Grenzwert überschreitet. Der so ermittelte Zeitpunkt stellt eine absolute Zeitgrenze dar, die durch die Zeit T1+DT ab Zündung der ersten Stufe nicht überschritten werden darf. Näheres zu einem solchen Verfahren zur Desensibilierung der Auslöseempfindlichkeit ist in der DE 43 30 486 A1 beschrieben.

Alternativ kann vorgesehen sein, daß die Auslösung des Airbags von einer Insassenpositionserkennung, insbesondere einer Out-Of-Position-Erkennung beeinflußt wird. Bezogen auf die Auslösung der zweiten Airbag-Stufe ist es dann vorteilhaft, die Vorgabe der Zeitspanne T1 oder des Zeitfensters DT in Abhängigkeit einer Insassenpositionserkennung so zu steuern, daß eine Auslösung der zweite Stufe verhindert wird, wenn die Vorverlagerung zu weit fortgeschritten ist.

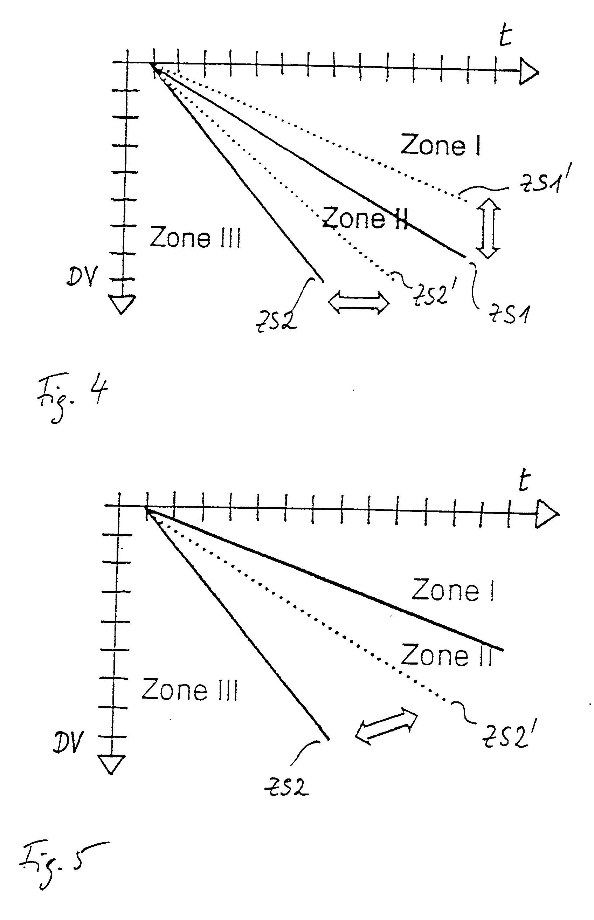

Das zweite Bewertungsverfahren, welches durch die Bewertungsstufe 2.2 ausgeführt wird und über die Auslösung der zweiten Stufe entscheidet, beruht erfindungsgemäß auf einer Einordnung des Crash-Ereignisses in ein rasterhaftes Schema von nach der Unfallschwere gestaffelten Unfallschwerezonen. In Fig. 2 ist dieses Schema dargestellt. Zur Auslösefindung der zweiten Airbag-Stufe werden die Crash-Ereignisse in insgesamt 4 Unfallschwerezonen Z0 bis Z3 eingeteilt. Diese Unfallschwerezonen sind eine Abbildung der Unfallschwere, in z.B. leichter, mittlerer und schwerer Crash und korrespondieren grob zur Geschwindigkeitsabnahme beim Crash. Eine notwendige Auslösebedingung zur Zündung der zweiten Stufe besteht darin, daß das Crash-Ereignis einer bestimmten Unfallschwerezone zugeordnet wurde. Die Zone Z0 entspricht einem sehr leichten Crash, der zu keiner Auslösung, weder der ersten noch der zweiten Stufe führen soll. Typische Crash-Ereignisse, die in diese Zone fallen sind z.B. ein Aufprall mit 40% Offset bei weniger als 15km/h. Ähnlich können die weiteren Zonen gebildet werden, indem ihnen typische Crash-Ereignisse zugeordnet werden: Zone I Z1 umfaßt leichtere Crashs mit Auslösung allenfalls der ersten Airbagstufe z.B. einen Schrägaufprall mit 25 km/h und im Übergang zu Zone II Z2 einen Frontalaufprall mit 30km/h. Die Zone II umfaßt mittlere Crashs und im Übergang zu Zone III auch Frontalcrashs mit 50km/h und führt zumindest für einen ungegurteten Insassen zu einer Zündung der zweiten Airbag-Stufe. Die Zone III umfaßt schwere Crashs, z.B. einen Frontalaufprall mit mehr als 56 km/h und führt, unabhängig davon ob der Fahrer angegurtet ist oder nicht, zu einer Auslösung der zweiten Airbag-Stufe. Wesentlich für das erfindungsgemäße Verfahren ist, daß das Zonenverfahren ausschließlich zur Auslösentscheidung für die zweite Stufe dient. Konkret bedeutet dies, daß das Zonenverfahren auf die Crash-Ereignisse abstimmbar und optimierbar ist, welche oberhalb der Schwelle für die Auslösung der ersten Stufe liegen. Eine Abgrenzung der Zone ohne Auslösung Z0 zur ersten Zone Z1 kann daher entfallen. Weiterhin ist wesentlich für das erfindungsgemäße Verfahren, daß erst nach Verstreichen der Zeitspanne T1, ca. 15-18msec nach Auslösen der ersten Stufe die Zuordnung des Crash-Ereignisses zu einer Unfallschwerezone die Auslösung der zweiten Stufe beeinflußt.

Unter Berücksichtigung von auf den Insassen oder die Crashparameter bezogene Zustandsgrößen, wie oben angeführt, können die Zonenschranken in Richtung "Auslösung" oder "Nichtauslösung" verschoben werden, wie dies in dem folgenden Ausführungsbeispiel verdeutlicht wird.

In dem Ausführungsbeispiel werden im Rahmen des zweiten Bewertungsverfahrens die einzelnen Unfallschwerezonen in einem Geschwindigkeits-Ereignisraum (Geschwindigkeits-Zeit-Schema) gleichzeitig mit der crashbedingten Geschwindigkeitsabnahme DV in Abhängigkeit von der Zeit t generiert. Dem Verfahren liegt der Ansatz zugrunde, daß ein leichter Crash im Mittel geringere Beschleunigungswerte (Verzögerungswerte) aufweist als ein schwerer Crash. Werden der Einfachheit halber die typischen Beschleunigungen als konstant über die Crashdauer hinweg angenommen, ergeben sich die zugehörigen Geschwindigkeiten DV für die Dauer des Crashs als linear abnehmende Funktionen der Zeit. Zur gegenseitigen Abgrenzung der Unfallschwerezonen ist es daher sinnvoll, die Zonenschranken nicht als Schwellen, sondern als abnehmende Geraden im Geschwindigkeits-Ereignisraum abzubilden. In Fig. 3 sind die Zonenschranken ZS1 und ZS2, welche die drei Unfallschwerezonen Z1, Z2, Z3 voneinander abgrenzen, als Grenzgeraden dargestellt. Diese Grenzgeraden Y=mX+b können durch Angabe der Steigung m und des Achsenabschnitts b in Realzeit berechnet und generiert oder in einer Variablen akkumuliert werden, so daß sie bei der Zonenabfrage zur Verfügung stehen. Allgemein können die Zonenschranken im Geschwindigkeits-Ereignisraum natürlich auch durch geeignete nichtlineare Funktionen generiert werden.

Zur Bewertung hinsichtlich der Unfallschwere wird das gemessene Beschleunigungssignal unter Verwendung einer einfachen Integration zu einem DV-Geschwindigkeitssignal aufbereitet. In Fig. 3 sind drei typische DV-Geschwindigkeitssignale als Funktion der Zeit t gezeigt, welche auf der Basis von konstanten, typische Crash-Ereignisse darstellenden Beschleunigungswerten berechnet wurden. Die durchgezogene Linie entspricht einem schweren Crash, die gestrichelte Linie einem mittleren Crash und die punktierte Linie einem leichten Crash. Die typischen Geschwindigkeitsabnahmen von realen Crash-Ereignissen zeigen ein qualitativ ähnliches Verhalten.

Anhand von Fig. 3 wird das erfindungsgemäße Bewertungsverfahren erläutert. Findet zu Zeitpunkt t1 die Auslösung der ersten Stufe statt, dann wird nach Verstreichen der Zeitspanne T1 zum Zeitpunkt t2 überprüft, in welcher Unfallschwerezone, sich das ermittelte DV-Signal befindet. Allgemein besteht eine notwendigen Auslösebedingung zur Zündung der zweite Stufe darin, daß das ermittelte DV-Signal sich innerhalb einer bestimmten Unfallschwerezone befindet. Befindet sich z.B. zum Zeitpunkt t1 das DV-Signal in Zone I Z1 so liegt ein leichter Crash vor und die zweite Stufe wird nicht ausgelöst, weil dies für diese Unfallschwere nicht erwünscht und deshalb so nicht vorgesehen ist. Befindet sich das DV-Signal in Zone II Z2 so ist dies eine notwendige Bedingung für eine Auslösung der zweiten Stufe. Ob es tatsächlich zur Auslösung kommt, kann von weiteren Auslösebedingungen abhängig gemacht werden, z.B. ob der Insasse angegurtet ist oder nicht. Je nach Ausführung kann, wie bereits dargestellt, innerhalb eines Zeitfenster DT nach dem Zeitpunkt t2 die Beobachtung und Bewertung fortgesetzt und eine Auslöseentscheidung auch noch innerhalb dieses Zeitfensters zu dem Zeitpunkt getroffen werden, an dem alle erforderlichen Auslösebedingungen erfüllt sind. Aus der Darstellung in Fig. 3 ist gut ersichtlich, daß nach Verstreichen der Zeitspanne T1 die verschiedenen typischen Crash-Ereignisse im Geschwindigkeits-Ereignisraum gut voneinander zu unterscheiden sind.

Der Aufbau der Zonenschranken, welche gemäß einer vorgegebenen Funktion zeitabhängig im Geschwindigkeits-Ereignisraum generiert werden, wird durch ein Triggersignal gestartet, welches durch das Crash-Ereignis verursacht ist. Der Aufbau der Zonen sollte zu einem möglichst frühen Zeitpunkt beginnen, um eine ausreichende Trennung zwischen den einzelnen Crashtypen sicherzustellen. Es ist daher vorteilhaft, wenn das Triggersignal bei Überschreiten einer Beschleunigungsschwelle (Alertschwelle) gesetzt wird, da ein solches Kriterium schnell reagiert. Alternativ könnte das Triggersignal bei Auslösung eines immer vor Zündung der zweiten Stufe ausgelösten Rückhaltemittels, insbesondere eines Gurtstraffers oder der ersten Stufe des Gasgenerators gesetzt werden.

Um das Auslöseverhalten besser an das Crash-Ereignis und an den Insassen anzupassen, ist es vorteilhaft, die Auslösebedingungen oder die Zonenschranken, welche die Unfallschwerezonen festlegen, in Abhängigkeit der auf den zu schützenden Insassen oder auf Crashparamter bezogenen Zustandsgrößen IP, CP zu verändern. Die auf den Insassen bezogenen Zustandsgrößen IP sind bereits im Zusammenhang mit der Insassenerkennung 5 in Fig. 1 beschrieben worden. Die auf die Crashparameter bezogene Zustandsgrößen CP sind an gleicher Stelle in Zusammenhang mit der Crashparametererfassung 6 erläutert worden.

In Fig. 4 ist dargestellt, wie die Unfallschwerezonen im Geschwindigkeits-Ereignisraum in Abhängigkeit des Insassengewichtes verschoben bzw. gedreht werden. Die gestrichelten Linien entsprechen den Zonenschranken ZS1', ZS2' für einen schweren und die durchgezogene Linie den Zonenschranken ZS1, ZS2 für einen leichten Insassen. In Abhängigkeit von dem ermittelten Gewicht der Sitzbelegung werden die Zonenschranken also in der Weise verschoben, daß eine Auslösung der zweiten Stufe mit zunehmendem Gewicht gefördert wird. Denn bei gleicher Unfallschwere benötigen leichte Insassen oft nur die erste Airbag-Stufe. Zweckmäßigerweise erfolgt eine Einteilung in Gewichtsklasssen, z.B. 4 Klassen auf der Fahrerseite und 5 Klassen auf der Beifahrerseite. Die unterste Gewichtsklasse auf der Beifahrerseite dient zum Abschalten des Beifahrerairbags, in die darauffolgenden Klasse fallen ein Großteil von auf dem Sitz festgurtbaren Kindersitzen, wobei sicherheitshalber die Abschaltung des Beifahrerairbags durch eine an sich bekannte Kindersitzerkennung gesteuert wird, z.B. mittels eines abfragbaren Transponders im Kindersitz.

Entsprechend können die Unfallschwerezonen auch in Abhängigkeit einer auf Crashparameter bezogenen Zustandsgröße CP gesteuert werden, insbesondere einer Zustandsgröße, welche auf die beim Crash zu erwartende oder auftretende Kollisionsenergie schließen läßt. Wie in Zusammenhang mit einer Beeinflussung der Zeitspanne T1 bereits dargestellt wurde, kann für die Zwecke der Auslösung der zweiten Airbag-Stufe die Fahrzeugeigengeschwindigkeit als eine solche, die Kollisionsenergie charakterisierende Zustandsgröße herangezogen werden, weil die Eigengeschwindigkeit nur als Zusatzinformation dient. Bei Crash mit hohen Geschwindigkeiten soll, insbesondere in bestimmten Insassen-Gewichtsklassen, eine Auslösung der 2. Airbag-Stufe gefördert werden, die eher im Grenzgebiet der Zonen verlaufen würden. In Fig. 5 ist dargestellt, wie die Zonenschranken im Geschwindigkeits-Ereignisraum in Abhängigkeit von der Fahrzeugeigengeschwindigkeit verschoben bzw. verdreht werden. Es wird nur die untere Zonenschranke ZS2 in Richtung Zeitachse gedreht, um die Zone III, welche immer eine Auslösung der zweiten Stufe nach sich zieht, zu vergrößern. Die Drehung der Geraden erfolgt dabei in drei Stufen, in Abhängigkeit davon in welchen von drei Geschwindigkeitsbereichen BV1, BV2, BV3 die Eigengeschwindigkeit fällt. Eine geeignete Abstufung ergibt sich durch eine Bereichswahl BV1<30km/h (Grundeinstellung), BV2=30-50km/h (erhöhte Empfindlichkeit), BV3>50km/h (volle Empfindlichkeit). Allgemein werden die Zonenschranken dadurch in der Weise verschoben, daß eine Auslösung der zweiten Stufe mit zunehmender Eigengeschwindigkeit bzw. Kollisionsenergie gefördert wird, wobei diese Verschiebung auch noch von dem Insassengewicht abhängig gesteuert werden kann.

## Patentansprüche

1. Verfahren zur Auslösung eines zweistufigen Airbag-Gasgenerators in einem Kraftfahrzeug, bei welchem ein Beschleunigungssignal gemessen, aufbereitet und
- mittels eines ersten Bewertungsverfahrens eine Auslöseentscheidung zur Auslösung der ersten Stufe des Gasgenerators und
- mittels eines zweiten Bewertungsverfahrens eine Auslöseentscheidung zur Auslösung der zweiten Stufe des Gasgenerators getroffen wird,
- wobei die Auslösung der zweiten Stufe erst nach Verstreichen einer vorgegebenen Zeitspanne T1 ab Zünden der ersten Stufe (3.1) freigegeben wird
**dadurch gekennzeichnet,**
**daß** bei dem zweiten Bewertungsverfahren unabhängig vom anfänglichen Verlauf des Beschleunigungssignals zunächst der gesamte Verlauf des Beschleunigungssignals zumindest bis zum Verstreichen der vorgegebenen Zeitspanne T1 ab Zünden der ersten Stufe (3.1) hinsichtlich der Unfallschwere bewertet wird, bevor auf der Grundlage vorgegebener Auslösebedingungen in Abhängigkeit der ermittelten Unfallschwere eine Auslöseentscheidung zur Zündung der zweiten Stufe (3.2) des Gasgenerators (3) getroffen wird.

2. Verfahren nach Anspruch 1,
**dadurch gekennzeichnet,**
**daß** die Zeitspanne T1 innerhalb eines Bereiches T1min bis Tlmax in Abhängigkeit einer auf die Crashparameter bezogenen Zustandsgröße (CP), welche auf die auftretende oder zu erwartende Kollisionsenergie des Crash-Ereignisses schließen läßt, so verändert wird, daß die Zeitspanne T1 zur unteren Schranke T1min hin verschoben wird, wenn die Zustandsgröße eine hohe Kollisionsenergie anzeigt.

3. Verfahren nach Anspruch 1 oder 2,
**dadurch gekennzeichnet,**
**daß** nur zum Zeitpunkt T1 oder innerhalb eines durch ein Zeitfenster DT bestimmten Zeitintervalls T1 bis T1+DT ab Zündung der ersten Stufe (3.1) eine Zündung der zweiten Stufe (3.2) nach den vorgegebenen Auslösebedingungen erfolgen kann.

4. Verfahren nach Anspruch 3,
**dadurch gekennzeichnet ;**
**daß** die Zeitspanne T1 und/oder das Zeitfenster DT in Abhängigkeit einer Insassenpositionserkennung oder einer aus dem Beschleunigungssignal hergeleiteten Zustandsgröße für die Insassenvorverlagerung so gesteuert werden, daß eine Auslösung der zweiten Stufe (3.2) verhindert wird, wenn die Vorverlagerung des Insassen zu weit fortgeschritten ist.

5. Verfahren nach Anspruch 3 oder 4,
**dadurch gekennzeichnet,**
**daß** wenn das für eine Zündung zugelassene Zeitintervall verstrichen ist, ohne daß eine Zündung der zweiten Stufe (3.2) stattgefunden hat, die Auslösebedingungen verändert werden.

6. Verfahren nach Anspruch 3 oder 4,
**dadurch gekennzeichnet,**
**daß** wenn das für eine Zündung zugelassene Zeitintervall verstrichen ist, ohne daß eine Zündung der zweiten Stufe (3.2) stattgefunden hat, die zweite Stufe (3.2) nicht gezündet wird.

7. Verfahren nach Anspruch 1,
**dadurch gekennzeichnet,**
**daß** bei dem zweiten Bewertungsverfahren allgemein das Crash-Ereignis in ein rasterhaftes Schema von nach der Unfallschwere gestaffelten Unfallschwerezonen (Z0-Z1) eingeordnet wird und eine notwendige Auslösebedingung zur Zündung der zweite Stufe (3.2) darin besteht, daß das Crash-Ereignis einer bestimmten Unfallschwerezone zugeordnet wurde.

8. Verfahren nach Anspruch 7,
**dadurch gekennzeichnet,**
**daß** bei dem zweiten Bewertungsverfahren das Beschleunigungssignal unter Verwendung einer einfachen Integration zu einem DV-Geschwindigkeitssignal aufbereitet wird, welches mit zeitlich veränderlichen Zonenschranken (ZS1, ZS2) verglichen und somit einer Unfallschwerezone in einem Geschwindigkeits-Ereignisraum zugeordnet wird, wobei eine notwendigen Auslösebedingung zur Zündung der zweite Stufe (3.2) darin besteht, daß das DV-Signal sich innerhalb einer bestimmten Unfallschwerezone befindet.

9. Verfahren nach Anspruch 8,
**dadurch gekennzeichnet,**
**daß** die Zonenschranken Kurven in dem Geschwindigkeits-Ereignisraum bilden, welche gemäß einer vorgegebenen Funktion zeitabhängig generiert werden, wobei die Generierung der Zonenschranken durch ein Triggersignal gestartet wird, welches durch das Crash-Ereignis verursacht ist.

10. Verfahren nach Anspruch 9,
**dadurch gekennzeichnet,**
**daß** das Triggersignal bei Überschreiten einer Beschleunigungsschwelle durch das Beschleunigungssignal gesetzt wird.

11. Verfahren nach Anspruch 9,
**dadurch gekennzeichnet,**
**daß** das Triggersignal bei Auslösung eines immer vor Zündung der zweiten Stufe (3.2) ausgelösten Rückhaltemittels, insbesondere eines Gurtstraffers (4), eines Gurtkraftbegrenzers oder der ersten Stufe (3.1) des Gasgenerators gesetzt wird.

12. Verfahren nach Anspruch 7,
**dadurch gekennzeichnet,**
**daß** die Auslösebedingungen und/oder die Zonenschranken, welche die Unfallschwerezonen festlegen, beeinflußt werden in Abhängigkeit einer auf den Insassen bezogenen Zustandsgröße (IP) oder in Abhängigkeit einer auf die Crashparameter bezogenen Zustandsgröße (CP), welche auf die auftretende oder zu erwartende Kollisionsenergie des Crash-Ereignisses schließen läßt.

13. Verfahren nach Anspruch 12,
**dadurch gekennzeichnet,**
**daß** die Zonenschranken (ZS2, ZS2') in Abhängigkeit von einer auf die Crashparameter bezogenen Zustandsgröße (CP), welche auf die auftretende oder zu erwartende Kollisionsenergie des Crash-Ereignisses schließen läßt, so verschoben werden, daß mit zunehmender Kollisionsenergie eine Auslösung der zweiten Stufe (3.2) gefördert wird.

14. Verfahren nach Anspruch 12 oder 13,
**dadurch gekennzeichnet,**
**daß** in Abhängigkeit von dem ermittelten Gewicht der Sitzbelegung die Zonenschranken (ZS1, ZS1', ZS2, ZS2') in der Weise verschoben werden, daß eine Auslösung der zweiten Stufe (3.2) mit zunehmendem Gewicht gefördert wird.

15. Verfahren nach Anspruch 1, 2, 12 oder 13,
**dadurch gekennzeichnet,**
**daß** bei der Bildung einer Auslöseentscheidung zur Zündung der zweiten Stufe (3.2) des Gasgenerators die Fahrzeugeigengeschwindigkeit im Sinne einer Zustandsgröße (CP) einbezogen wird, welche auf die auftretende oder zu erwartende Kollisionsenergie des Crash-Ereignisses schließen läßt.

## Claims

1. A process for the triggering of a two-stage airbag gas generator in a motor vehicle in which an acceleration signal is measured and processed and
- a triggering decision to trigger the first stage of the gas generator is taken by means of a first evaluation process and
- a triggering decision to trigger the second stage of the gas generator is taken by means of a second evaluation process,
- the triggering of the second stage not being initiated until a predetermined period of time T1 after ignition of the first stage (3.1) has elapsed,
**characterised in that**
in the second evaluation process the entire course of the acceleration signal at least until the predetermined period of time T1 after ignition of the first stage (T1) has elapsed is first evaluated in terms of the severity of the accident irrespective of the initial course of the acceleration signal before a triggering decision to ignite the second stage (3.2) of the gas generator (3) is then taken on the basis of predetermined triggering conditions dependent on the determined severity of the accident.

2. A process in accordance with claim 1,
**characterised in that**
the period of time (T1) is altered within a range (T1min to T1max) which is dependent on a state variable (CP) related to the crash parameters and from which it is possible to deduce the actual or anticipated collision energy of the crash event in such a manner that the period of time (T1) is shifted down towards the lower limit (T1min) when the state variable indicates high collision energy.

3. A process in accordance with claim 1 or 2,
**characterised in that**
the ignition of the second stage (3.2) under the predetermined triggering conditions is able to take place only at the point (T1) or within a time interval (T1 to T1+DT) from ignition of the first stage (3.1) determined by a time window (DT).

4. A process in accordance with claim 3,
**characterised in that**
the period of time (T1) and/or the time window (DT) are controlled dependent either on a passenger position recognition system or on a state variable for the forward movement of the passenger derived from the acceleration signal in such a manner that the triggering of the second stage (3.2) is prevented if the forward movement of the passenger has progressed too far.

5. A process in accordance with claim 3 or 4,
**characterised in that**
if the time interval permitted for ignition has elapsed without ignition of the second stage (3.2) having taken place the triggering conditions are altered.

6. A process in accordance with claim 3 or 4,
**characterised in that**
if the time interval permitted for ignition has elapsed without ignition of the second stage (3.2) having taken place the second stage (3.2) is not ignited.

7. A process in accordance with claim 1,
**characterised in that**
in the second evaluation process the crash event is generally classified according to a grid-type table of accident severity zones (Z0-Z1) graded according to the severity of the accident and a mandatory triggering condition for ignition of the second stage (3.2) is the classification of the crash event in a certain accident severity zone.

8. A process in accordance with claim 7,
**characterised in that**
in the second evaluation process the acceleration signal is processed by simple integration to provide a data processing speed signal which is compared with time-modifiable zone limits (ZS1, ZS2) and thus classified in an accident severity zone in a speed event space, a mandatory triggering condition for ignition of the second stage (3.2) being the location of the data processing signal within a given accident severity zone.

9. A process in accordance with claim 8,
**characterised in that**
the zone limits form curves in the speed event space which are generated dependent on time according to a predetermined function, the generation of the zone limits being started by a trigger signal which is caused by the crash event.

10. A process in accordance with claim 9,
**characterised in that**
the trigger signal is given when the acceleration signal exceeds an acceleration threshold.

11. A process in accordance with claim 9,
**characterised in that**
the trigger signal is given when a restraint means always triggered before the ignition of the second stage (3.2), in particular a belt tightener (4), a belt force limiter or the first stage (3.1) of the gas generator, is triggered.

12. A process in accordance with claim 7,
**characterised in that**
the triggering conditions and/or the zone limits which determine the accident severity zones are influenced dependent on a state variable (IP) related to the passenger or dependent on a state variable (CP) related to the crash parameters from which it is possible to deduce the actual or anticipated collision energy of the crash event.

13. A process in accordance with claim 12,
**characterised in that**
the zone limits (ZS2, ZS2') are shifted dependent on a state variable (CP) related to the crash parameters from which it is possible to deduce the actual or anticipated collision energy of the crash event in such a manner that the triggering of the second stage (3.2) is effected as the collision energy increases.

14. A process in accordance with claim 12 or 13,
**characterised in that**
the zone limits (ZS1, ZS1', ZS2, ZS2') are shifted dependent on the determined weight of the seat occupant in such a manner that the triggering of the second stage (3.2) is effected as the weight increases.

15. A process in accordance with claim 1, 2, 12 or 13,
**characterised in that**
in making the triggering decision to ignite the second stage (3.2) of the gas generator the air speed of the vehicle in the form of a state variable (CP) from which it is possible to deduce the actual or anticipated collision energy of the crash event is taken into consideration.

## Revendications

1. Procédé de déclenchement d'un générateur de gaz d'airbag à deux étages dans une automobile, dans lequel un signal d'accélération est mesuré et traité et
- une décision de déclenchement est prise, à l'aide d'une première procédure d'évaluation pour le déclenchement du premier étage du générateur de gaz, et
- une décision de déclenchement est prise, à l'aide d'une deuxième procédure d'évaluation pour le déclenchement du deuxième étage du générateur de gaz,
- où le déclenchement du deuxième étage n'est autorisé qu'après écoulement d'une plage prédéfinie de temporisation T1 à compter de l'activation du premier étage (3.1),
**caractérisé en ce que**, pour la deuxième procédure d'évaluation, indépendamment de l'allure initiale du signal d'accélération, l'allure globale du signal d'accélération est d'abord évaluée en ce qui concerne la gravité de l'accident, au moins jusqu'à écoulement de la plage prédéfinie de temporisation T1 à compter de l'activation du premier étage (3.1), avant que ne soit prise une décision de déclenchement sur l'activation du deuxième étage (3.2) du générateur de gaz (3), sur la base des conditions de déclenchement prédéfinies en fonction de la gravité d'accident détectée.

2. Procédé selon la revendication 1, **caractérisé en ce que** la plage de temporisation T1 à l'intérieur d'une plage T1min à T1max est modifiée en fonction d'un paramètre d'état (CP) se rapportant aux paramètres de collision qui renseigne sur l'énergie de la collision survenante ou à survenir, de telle manière que la plage de temporisation T1 est déplacée vers la limité inférieure T1min, lorsque le paramètre d'état indique une énergie de collision élevée.

3. Procédé selon la revendication 1 ou 2, **caractérisé en ce qu'**une activation du deuxième étage (3.2) selon les conditions prédéfinies de déclenchement ne peut intervenir qu'à l'instant T1 ou à l'intérieur d'un intervalle T1 à T1 + DT, déterminé par la fenêtre de temps DT, à compter de l'activation du premier étage (3.1).

4. Procédé selon la revendication 3, **caractérisé en ce que** la plage de temporisation T1 et / ou la fenêtre de temps DT sont pilotées en fonction d'une reconnaissance de la position de l'occupant, ou d'un paramètre d'état pour le déplacement en avant de l'occupant déduit du signal d'accélération, de telle manière que le déclenchement du deuxième étage (3.2) est empêché lorsque le déplacement en avant de l'occupant est trop avancé.

5. Procédé selon la revendication 3 ou 4, **caractérisé en ce que**, lorsque l'intervalle admis pour une activation s'est écoulé sans que l'activation du deuxième étage (3.2) se soit produite, les conditions de déclenchement sont modifiées.

6. Procédé selon la revendication 3 ou 4, **caractérisé en ce que**, lorsque l'intervalle admis pour une activation s'est écoulé sans que l'activation du deuxième étage (3.2) se soit produite, le deuxième étage (3.2) n'est pas activé.

7. Procédé selon la revendication 1, **caractérisé en ce que** pour la deuxième procédure d'évaluation en général, l'événement de collision est classé dans un schéma tramé de zones (Z0 - Z1 ) de gravité d'accident échelonnées selon la gravité d'accident et qu'une condition de déclenchement nécessaire pour l'activation du deuxième étage (3.2) réside en ceci que l'événement de collision est attribué à une zone de gravité d'accident déterminée.

8. Procédé selon la revendication 7, **caractérisé en ce que** pour la deuxième procédure d'évaluation, le signal d'accélération est converti, par l'utilisation d'une intégration simple, en un signal informatique de vitesse qui est comparé à des limites de zone (ZS1, ZS2) variables dans le temps et attribué à une zone de gravité d'accident dans un espace d'événements de vitesse, dans lequel une condition de déclenchement nécessaire pour l'activation du deuxième étage (3.2) réside en ceci que le signal informatique se trouve à l'intérieur d'une zone de gravité d'accident déterminée.

9. Procédé selon la revendication 8, **caractérisé en ce que** les limites de zone forment des courbes dans l'espace d'événements de vitesse qui sont générées en fonction du temps selon une fonction prédéfinie, dans lequel la génération de limites de zone est démarrée par un signal de déclenchement qui est causé par l'événement de collision.

10. Procédé selon la revendication 9, **caractérisé en ce que** le signal de déclenchement est donné par le dépassement d'un seuil d'accélération par le signal d'accélération.

11. Procédé selon la revendication 9, **caractérisé en ce que** le signal de déclenchement est donné par le déclenchement d'un moyen de retenue, en particulier un raidisseur (4) de ceinture de sécurité, un limiteur de force de ceinture de sécurité ou le premier étage (3.1) du générateur de gaz, qui est toujours déclenché avant l'activation du deuxième étage (3.2).

12. Procédé selon la revendication 7, **caractérisé en ce que** les conditions de déclenchement et / ou les limites de zone qui définissent les zones de gravité d'accident sont influencées en fonction d'un paramètre d'état (IP) se rapportant à l'occupant ou d'un paramètre d'état (CP) se rapportant aux paramètres de collision, qui renseigne sur l'énergie de la collision survenante ou à survenir.

13. Procédé selon la revendication 12, **caractérisé en ce que** les limites de zone (ZS2, ZS2') en fonction d'un paramètre d'état (CP) se rapportant aux paramètres de collision, qui renseigne sur l'énergie de la collision survenante ou à survenir, sont décalées de telle manière qu'un déclenchement du deuxième étage (3.2) intervient plus facilement pour une énergie de collision plus élevée.

14. Procédé selon la revendication 12 ou 13, **caractérisé en ce que**, en fonction du poids détecté d'occupation de siège, les limites de zone (ZS1, ZS1', ZS2, ZS2') sont décalées de manière à ce qu'un déclenchement du deuxième étage (3.2) intervienne plus facilement pour un poids plus élevé.

15. Procédé selon la revendication 1, 2, 12 ou 13, **caractérisé en ce que**, lors de la formation d'une décision de déclenchement pour l'activation du deuxième étage (3.2) du générateur de gaz, la vitesse propre du véhicule est incluse, au sens d'un paramètre d'état qui renseigne sur l'énergie de la collision survenante ou à survenir.
